# EUROPEAN PATENT SPECIFICATION

(11) **EP 3 673 207 B1**
(45) Date of publication and mention of the grant of the patent: **05.01.2022**
(21) Application number: 18743518.5
(22) Date of filing: 20.07.2018
(51) Int. Cl.: F24C 15/00, F25D 21/12, F25D 31/00, F24C 15/32, A21B 3/04, F25D 17/04, F24C 15/18, F25D 21/14

(54) **AN OVEN COMPRISING A COOLING UNIT**
OFEN MIT EINER KÜHLEINHEIT
FOUR COMPRENANT UNE UNITÉ DE REFROIDISSEMENT

(30) Priority: 24.08.2017 TR 201712676
(43) Date of publication of application: 01.07.2020
(73) Proprietor: Arçelik Anonim Sirketi, 34445 Istanbul (TR)
(72) Inventor: GOKMEN, Erkan, 34950 Istanbul (TR); OZDEMIR, Ahmet Refik, 34950 Istanbul (TR); AYNUR, Tolga Nurettin, 34950 Istanbul (TR); KARAKAYA, Erkan, 34950 Istanbul (TR)
(86) International application number: PCT/EP2018/069822
(87) International publication number: WO 2019/037982

(56) References cited:
- WO-A2-2005/060449
- FR-A1- 2 411 368
- JP-A- 2002 147 919
- JP-A- 2004 353 919
- JP-B2- 3 263 627

## Description

The present invention relates to an oven comprising a cooling unit.

In ovens, the cooking process is generally performed by operating together the heaters and the fan disposed in the oven cavity. The foodstuff stored in a cooling device such as a refrigerator is taken out of the cooling device and then placed into the oven to be cooked. If the cooking process is not started immediately after the foodstuff is taken out of the cooling device, the foodstuff spoils over time and the nutritional quality thereof impairs. Therefore, the foodstuff must be removed from the cooling device and placed in the oven immediately before the cooking process; however, it is not possible for the user to automatically start the cooking process at the desired time.

In the state of the art ovens are known, that comprise a cooling system to keep the foodstuff cold until the cooking process starts. In the ovens comprising a cooling system, the air cooled by the cooling system is delivered on the foodstuff placed into the oven cavity and the air that passed over the foodstuff is returned to the cooling system to be cooled again.

However, during the operation of the cooling system the hot air water vapor in the outer environment condenses on the surfaces of the cooling unit that are at a temperature under the condensation temperature, causing frost in the course of time. The frost forming on the surfaces of the cooling unit leads to heat insulation effect and causes the compartment wherein the foodstuff is placed not to be sufficiently cooled and the electricity consumption of the cooling device to increase in the refrigeration cycles. In the state of the art cooling systems, defrosting process is performed by using heaters mounted on the cooling unit and the frost forming on the cooling unit is defrosted.

In the state of the art Great Britain Patent Application No. GB2366075, an oven that is cooled by using a heat exchanger and a fan is disclosed. Further relevant prior art can be found in WO2005/060449A2.

The aim of the present invention is the realization of an oven having a cooling system that provides efficient cooling.

The oven realized in order to attain the aim of the present invention, explicated in the first claim and the respective claims thereof, comprises a body; an oven cavity wherein the foodstuffs to be cooked are placed; a casing that is disposed in the body and that is in the form of a box with front side open and that surrounds the oven cavity; a heater that is disposed in the casing; a cooling unit that is disposed on the body and that enables the foodstuffs placed into the oven cavity to be cooled, and a control unit that controls the heater and the cooling unit. The foodstuff to be cooked is placed into the oven cavity from the open front side of the casing. The foodstuff is cooked by heating the oven cavity by means of the heater.

The oven of the present invention comprises an air duct that is arranged between the cooling unit and the oven cavity and that enables the hot air in the oven cavity to be delivered to the cooling unit; a shutter that is disposed on the air duct, and the control unit that controls the opening/closing of the shutter. When the oven is operated with the cooling function selected in order to cool the foodstuff placed into the oven cavity, frost forms on the surfaces of the cooling unit. When the user starts the oven with the heating function in order to cook the foodstuff, the control unit opens the shutter on the air duct opening from the oven cavity to the cooling unit and thus the hot air formed in the oven cavity is enabled to be delivered onto the cooling unit. Consequently, the frost forming on the surfaces of the cooling unit is prevented without the need for using an addition defrost heater on the cooling unit.

According to the present invention, the oven comprises a temperature sensor that is disposed on the cooling unit and the control unit that controls the shutter according to the data received from the temperature sensor. The control unit brings the shutter to the open or closed position according to the temperature value measured on the surface of the cooling unit.

In another embodiment of the present invention, the oven comprises the control unit that compares the temperature value measured by the temperature sensor with the limit temperature value predetermined by the producer, and that, if the measured temperature value is lower than the limit temperature value, enables the shutter to be opened, and that if the measured temperature value is higher than the limit temperature value, the shutter to be closed. The limit temperature value is predetermined by the producer as the temperature value where the frosting starts on the surfaces of the cooling unit. By comparing the temperature value measured by the temperature sensor with the limit temperature value, the control unit determines whether frost has formed on the surfaces of the cooling unit. If the temperature value measured by the temperature sensor is lower than the limit temperature value, the control unit opens the shutter and enables the hot air in the oven cavity to be passed through the air duct and delivered onto the cooling unit. If the measured temperature value is higher than the limit temperature value, the control unit keeps the shutter closed.

In another embodiment of the present invention, the air duct comprises an air inlet duct providing the delivery of the air heating up in the oven cavity to the cooling unit, and an air outlet duct providing the delivery of the air leaving the cooling unit to the oven cavity. In this embodiment, after being passed over the cooling unit so as to cool down, the hot air delivered from the oven cavity to the cooling unit through the air inlet duct is sent back to the oven cavity through the air outlet duct. Thus, a closed cycle is formed between the oven cavity and the cooling unit, and the air taken from the oven cavity is enabled to be delivered back to the oven cavity without being discharged to the outer environment. Consequently, the hot and humid air is prevented from being discharged to the outer environment, thus preventing the ambient conditions from changing.

In another embodiment of the present invention, the oven comprises a condenser that is disposed on the air outlet duct. The air carried over the cooling unit is passed over the condenser and then sent back to the oven cavity through the air outlet duct. The air getting humid after being passed over the cooling unit is enabled to be dehumidified by means of the condenser before being sent to the oven cavity.

In another embodiment of the present invention, the oven comprises a sump that is disposed on the base of the cooling unit and that is detachably mounted onto the body. The liquid obtained as a result of the thawing of the frost on the cooling unit flows down from the surfaces of the cooling unit and collected in the sump. The liquid collected in the sump is moved away from the oven by taking the sump out of the body.

By means of the present invention, an oven is realized, having an air duct that enables air to be delivered from the oven cavity to the cooling unit. Thus, the defrosting of the cooling unit is realized with the air received from the oven cavity, eliminating the need for using an additional heater.

The oven realized in order to attain the aim of the present invention is illustrated in the attached figures, where:
Figure 1 - is the cross-sectional schematic view of an oven.
Figure 2 - is the cross-sectional schematic view of the oven in an embodiment of the present invention.

The elements in the figures are numbered as follows:
1. Oven
2. Body
3. Oven cavity
4. Casing
5. Heater
6. Cooling unit
7. Control unit
8. Air duct
9. Shutter
10. Temperature sensor
11. Air inlet duct
12. Air outlet duct
13. Condenser
14. Sump

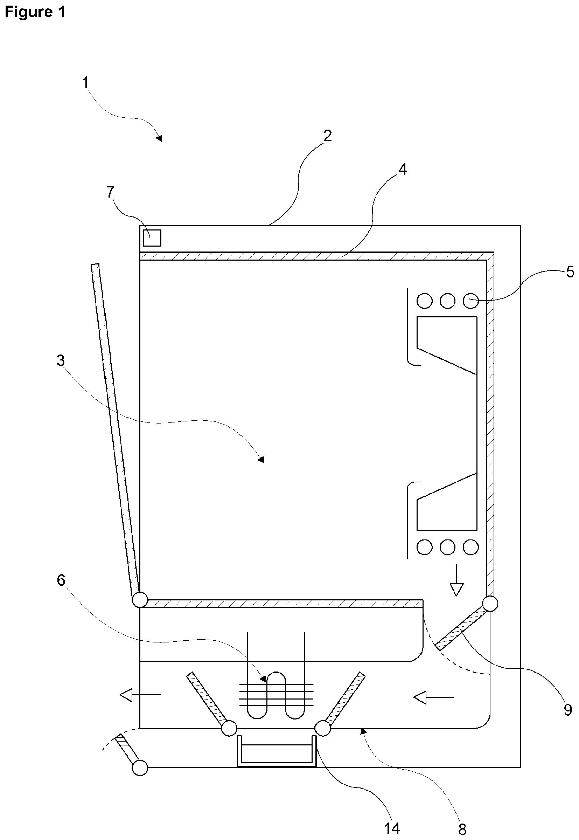

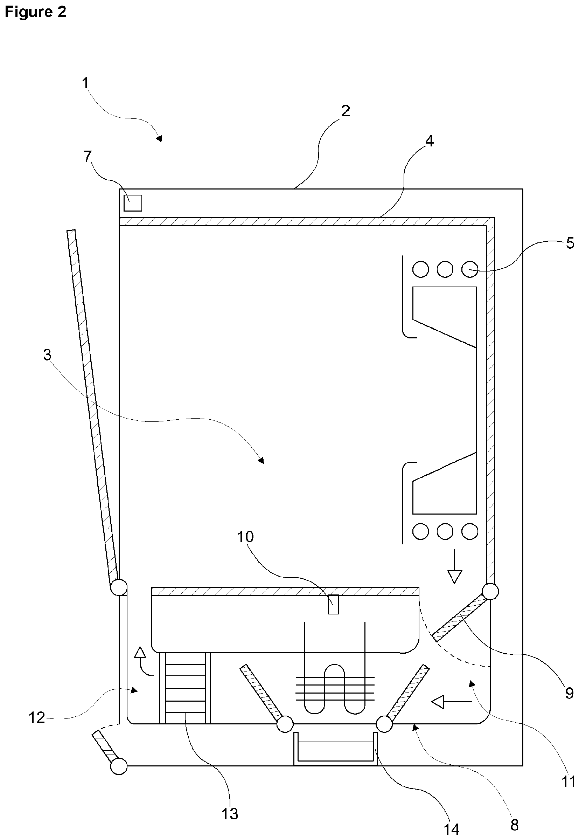

The oven (1) comprises a body (2); an oven cavity (3) wherein the foodstuffs to be cooked are placed; a casing (4) that is disposed in the body (2) and that is in the form of a box with front side open and that surrounds the oven cavity (3); a heater (5) that is disposed in the casing (4); a cooling unit (6) that is disposed on the body (2) and that enables the foodstuffs placed into the oven cavity (3) to be cooled, and a control unit (7) that controls the heater (5) and the cooling unit (6) (Figure 1 and Figure 2). The heater (5) or the cooling unit (6) is operated by means of the control unit (7) and thus the oven (1) is enabled to be operated in the heating function or the cooling function.

When the user activates the cooling function of the oven (1), the control unit (7) operates the cooling unit (6), and the cooling process is performed preferably by means of an evaporator and a cold zone is formed around the cooling unit (6). By using the air around the cooling unit (6) for the cooling of the foodstuff, the foodstuff placed into the oven (1) is enable to be stored in the oven cavity (3) without getting spoiled until the cooking process starts. When the user activates the heating function of the oven (1), the control unit (7) deactivates the cooling unit (6) and operates the heater (5), thus enabling the foodstuff to be cooked.

The oven (1) of the present invention comprises,
- an air duct (8) that is arranged between the cooling unit (6) and the oven cavity (3) and that enables the hot air in the oven cavity (3) to be delivered to the cooling unit (6);
- a shutter (9) that is disposed on the air duct (8), and the control unit (7) that controls the opening/closing of the shutter (9).

The cold air forming in the vicinity of the cooling unit (6) while the oven (1) is operated with the cooling function causes formation of frost on the surfaces of the cooling unit (6). While the oven (1) is operated with the heating function, the air heated by the heater (5) is passed through the air duct (8) and carried from the oven cavity (3) to the cooling unit (6). When the heater (5) is activated, the control unit (7) opens the shutter (9), thus providing that the hot air is delivered from the oven cavity (3) into the air duct (8) and that the frost forming on the cooling unit (6) is thawed with the carried hot air. Thus, the need for using an additional heater to defrost the frost formed on the surface of the cooling unit (6) is eliminated.

In an embodiment of the present invention, when the heater (5) is operated, the control unit (7) enables the shutter (9) to be kept open for a time predetermined by the producer. By keeping the shutter (9) open for a time predetermined by the producer, the control unit (7) controls the amount of hot air that is delivered from the oven cavity (3) to the cooling unit (6). Thus, the frost forming on the cooling unit (6) is enabled to be efficiently defrosted.

According to the present invention, the oven (1) comprises a temperature sensor (10) that is disposed on the cooling unit (6) and the control unit (7) that controls the shutter (9) according to the data received from the temperature sensor (10). By opening/closing the shutter (9), the control unit (7) controls the hot air delivered to the cooling unit (6). Thus, by means of the shutter (9), the cooling unit (6) is enabled to be heated and the formation of frost thereon is prevented.

In another embodiment of the present invention, the oven (1) comprises the control unit (7) that compares the temperature value (T1) measured by the temperature sensor (10) with the limit temperature value (Tlim) predetermined by the producer,
- that opens the shutter (9) if the measured temperature value (T) is lower than the limit temperature value (Tlim), and
- that closes the shutter (9) if the measured temperature value (T) is higher than the limit temperature value (Tlim).

After activating the heater (5) and opening the shutter (9), the control unit (7) controls the surface temperature of the cooling unit (6) with the measurements performed by the temperature sensor (10). If the measured temperature value (T1) is lower than the limit temperature value (Tlim), the control unit (7) decides that frost has formed on the cooling unit (6), and opens the shutter (9) and enables the hot air in the oven cavity (3) to be passed through the air duct (8) and delivered onto the cooling unit (6). If the measured temperature value (T1) is higher than the limit temperature value (Tlim), the control unit (7) decides that there is no frost formation on the cooling unit (6), and therefore, keeps the shutter (9) closed.

In another embodiment of the present invention, the air duct (8) comprises an air inlet duct (11) providing the delivery of the air heating up in the oven cavity (3) to the cooling unit (6), and an air outlet duct (12) providing the delivery of the air leaving the cooling unit (6) to the oven cavity (3). In this embodiment, after being passed over the cooling unit (6) so as to cool down, the hot air delivered from the oven cavity (3) to the cooling unit (6) is sent back to the oven cavity (3). Thus, a closed cycle is formed, and all the air taken from the oven cavity (3) is sent back to the oven cavity (3) (Figure 2).

In another embodiment of the present invention, the oven (1) comprises a condenser (13) that is disposed on the air outlet duct (12). In this embodiment, the condenser (13) is positioned at the outlet of the cooling unit (6). Thus, the air that cools down by coming into contact with the cooling unit (6) is enabled to be condensed and dehumidified at the condenser (13) before being sent to the oven cavity (3).

In another embodiment of the present invention, the oven (1) comprises a sump (14) that is disposed on the base of the cooling unit (6) and that is detachably mounted onto the body (2). The liquid obtained as a result of the thawing of the frost on the cooling unit (6) is collected in the sump (14) disposed at the base of the cooling unit (6). The detachably mounted sump (14) enables the user to take the sump (14) out of the oven (1) and to empty the water collected therein.

In the oven (1) of the present invention, the frost forming on the surface of the cooling unit (6) is enabled to be defrosted with the hot air received from the oven cavity (3). Thus, the need for disposing a heater on the cooling unit (6) to prevent frost is eliminated.

## Claims

1. An oven (1) **comprising** a body (2); an oven cavity (3) wherein the foodstuffs to be cooked are placed; a casing (4) that is disposed in the body (2) and that is in the form of a box with front side open and that surrounds the oven cavity (3); a heater (5) that is disposed in the casing (4); a cooling unit (6) that is disposed on the body (2) and that enables the foodstuffs placed into the oven cavity (3) to be cooled, and a control unit (7) that controls the heater (5) and the cooling unit (6), an air duct (8) that is arranged between the cooling unit (6) and the oven cavity (3) and that enables the hot air in the oven cavity (3) to be delivered to the cooling unit (6), a shutter (9) that is disposed on the air duct (8), and the control unit (7) that controls the opening/closing of the shutter (9) **characterized by** a temperature sensor (10) that is disposed on the cooling unit (6) and the control unit (7) that controls the shutter (9) according to the data received from the temperature sensor (10).

2. An oven (1) as in Claim 1, **characterized by** the control unit (7) that compares the temperature value (T1) measured by the temperature sensor (10) with the limit temperature value (Tlim) predetermined by the producer,
- that opens the shutter (9) if the measured temperature value (T) is lower than the limit temperature value (Tlim), and
- that closes the shutter (9) if the measured temperature value (T) is higher than the limit temperature value (Tlim).

3. An oven (1) as in any one of the above claims, **characterized by** the air duct (8) that comprises an air inlet duct (11) providing the delivery of the air heating up in the oven cavity (3) to the cooling unit (6), and an air outlet duct (12) providing the delivery of the air leaving the cooling unit (6) to the oven cavity (3).

4. An oven (1) as in Claim 3, **characterized by** a condenser (13) that is disposed on the air outlet duct (12).

5. An oven (1) as in any one of the above claims, **characterized by** a sump (14) that is disposed on the base of the cooling unit (6) and that is detachably mounted onto the body (2).

## Patentansprüche

1. Ein Ofen (1) **umfasst** einen Körper (2), einen Ofenhohlraum (3), worin die zu kochenden Nahrungsmittel platziert werden, ein Gehäuse (4) in Form eines Kastens mit offener Vorderseite, das im Körper (2) angeordnet ist und den Ofenhohlraum (3) umgibt, ein Heizer (5), der in dem Gehäuse (4) angeordnet ist, eine Kühleinheit (6), die am Körper (2) angeordnet ist und das Kühlen der in den Ofenhohlraum (3) eingelegten Lebensmittel ermöglicht; eine Steuereinheit (7), die den Heizer (5) und die Kühleinheit (6) steuert, einen Luftkanal (8), der zwischen dem Kühleinheit (6) und dem Ofenhohlraum (3) angeordnet ist und der eine Zuführung der Heißluft im Ofenhohlraum (3) zum Kühleinheit (6) ermöglicht, einen Verschluss (9), der an dem Luftkanal (8) angeordnet ist; sowie eine Steuereinheit (7), die das Öffnen/Schließen des Verschlusses (9) steuert; **gekennzeichnet ist er durch** einen Temperatursensor (10), der an der Kühleinheit (6) angeordnet ist, und die Steuereinheit (7), und den Verschluss (9) gemäß den von dem Temperatursensor (10) empfangenen Daten steuert.

2. Ein Ofen (1), wie in Anspruch 1 aufgeführt, **ist dadurch gekennzeichnet, dass** die Steuereinheit (7), den vom Temperatursensor (10) gemessenen Temperaturwert (T1) mit dem vom Hersteller vorgegebenen Temperaturgrenzwert (Tlim) vergleicht,
- dass der Verschluss (9) geöffnet wird, wenn der gemessene Temperaturwert (T) kleiner als der Temperaturgrenzwert (Tlim) ist, und
- dass der Verschluss (9) schließt, wenn der gemessene Temperaturwert (T) höher als der Temperaturgrenzwert (Tlim) ist.

3. Ein Ofen (1), wie in einem der vorherigen Ansprüchen aufgeführt, **ist dadurch gekennzeichnet, dass** der Luftkanal (8) einen Lufteinlasskanal (11) umfasst, der die im Ofenhohlraum (3) aufgeheizte Luft an die Kühleinheit (6) liefert und einen Luftauslasskanal (12), der die Zufuhr der die Kühleinheit (6) verlassenden Luft zum Ofenhohlraum (3) bereitstellt.

4. Ein Ofen (1), wie in Anspruch 3 aufgeführt, **ist dadurch gekennzeichnet, dass** ein Kondensator (13) an dem Luftauslasskanal (12) angeordnet ist.

5. Ein Ofen (1), wie in einem der vorherigen Ansprüchen aufgeführt, **ist dadurch gekennzeichnet, dass** eine Wanne (14) auf der Basis der Kühleinheit (6) angeordnet und lösbar am Körper (2) befestigt ist.

## Revendications

1. Un four (1) **comprenant** un corps (2) ; une cavité de four (3) dans laquelle sont placés les aliments à cuire ; une enceinte (4) qui est disposée dans le corps (2) et qui a la forme d'une boîte avec le côté avant ouvert et qui entoure la cavité de four (3) ; un dispositif de chauffage (5) qui est disposé dans l'enceinte (4) ; une unité de refroidissement (6) qui est disposée sur le corps (2) et qui permet de refroidir les aliments placés dans la cavité du four (3), et une unité de commande (7) qui commande le dispositif de chauffage (5) et l'unité de refroidissement (6), un conduit d'air (8) qui est disposé entre l'unité de refroidissement (6) et la cavité du four (3) et qui permet à l'air chaud dans la cavité du four (3) d'être délivré à l'unité de refroidissement (6), un volet (9) qui est disposé sur le conduit d'air (8), et l'unité de commande (7) qui commande l'ouverture/la fermeture du volet (9), **est caractérisé en ce qu'**un capteur de température (10) est disposé sur l'unité de refroidissement (6) et l'unité de commande (7) commande le volet (9) selon les données reçues du capteur de température (10).

2. Un four (1) selon la déclaration 1, **est caractérisé en ce que** l'unité de commande (7) compare la valeur de température (T1) mesurée par le capteur de température (10) avec la valeur de température limite (Tlim) prédéterminée par le fabricant,
- qui ouvre le volet (9) si la valeur de température mesurée (T) est inférieure à la valeur de température limite (Tlim), et
- qui ferme le volet (9) si la valeur de température mesurée (T) est supérieure à la valeur de température limite (Tlim).

3. Un four (1) selon l'une quelconque des déclarations précédentes, **est caractérisé en ce que** le conduit d'air (8) comprend un conduit d'entrée d'air (11) fournissant la distribution de l'air se réchauffant dans la cavité du four (3) à l'unité de refroidissement (6), et un conduit de sortie d'air (12) fournissant la distribution de l'air quittant l'unité de refroidissement (6) à la cavité du four (3).

4. Un four (1) selon la déclaration 3, **est caractérisé en ce qu'**un condenseur (13) est disposé sur le conduit de sortie d'air (12).

5. Un four (1) selon l'une quelconque des déclarations précédentes, **est caractérisé en ce qu'**un carter (14) est disposé sur la base de l'unité de refroidissement (6) et est monté de manière amovible sur le corps (2).
